# EUROPEAN PATENT APPLICATION

(11) **EP 1 375 108 A1**
(43) Date of publication of application: **02.01.2004**
(21) Application number: 03253276.4
(22) Date of filing: 23.05.2003
(51) Int. Cl.: B29C 45/50

(54) **Injection apparatus and molding method in injection molding machine**

(30) Priority: 17.06.2002 JP 2002175902
(71) Applicant: FANUC LTD, Minamitsuru-gun, Yamanashi 401-0597 (JP)
(72) Inventor: Shiraishi, Wataru Room 8-108 Fanuc Manshonharimomi, Minamitsuru-gun, Yamanashi 401-0511 (JP); Takatsugi, Satoshi Fanuc Dai3virakaramatsu,, Minamitsuru-gun, Yamanashi 401-0511 (JP); Ishikuro, Toshio Fanuc Dai3virakaramatsu,, Minamitsuru-gun, Yamanashi 401-0511 (JP)
(74) Representative: Billington, Lawrence Emlyn

(57) **Abstract**

An injection apparatus in an injection molding machine transmits a drive force generated by an injecting servomotor to a screw (1) through a drive force transmitting mechanism (8) to move the screw (1) for performing injection. In addition, the injection apparatus has a dead zone of movement provided by a predetermined displacement distance (L=B-A) in the coupling between the injecting servomotor to the screw (1).

## Description

This invention relates to an injection apparatus of an injection molding machine and a molding method using the injection apparatus.

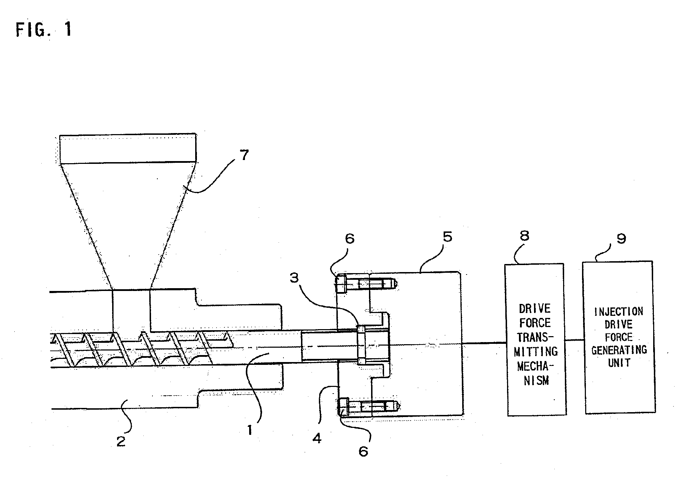

In a conventional injection molding machine, a screw and a screw axis drive unit are fast connected to each other to linearly transmit a force through a drive force transmitting mechanism for making the screw controllable so as to freely move the screw in an axial direction thereof. Fig. 1 shows a screw fast-connection part of a conventionally available general injection apparatus.

Referring to Fig. 1, a screw 1 inserted into a barrel 2 has, at a rear end thereof, a retainer 3. The screw 1 is mounted to a screw mounting member in an axially relatively immovable manner by fixing a sleeve 5 and a bush 4, which are provided as constituent parts of the screw mounting member, with bolts 6 or the like so as to hold the retainer 3 between the sleeve 5 and the bush 4. In addition, the rear end of the screw 1 and the bush 4 are spline-connected, and a rotation driving mechanism (not shown) is used to rotate the sleeve 5, thereby allowing the screw 1 to rotate through the bush 4 and the sleeve 5.

In addition, the sleeve 5 as one of the constituent parts of the screw mounting member is mechanically fast connected to an injection drive force generating unit 9 through a drive force transmitting mechanism 8. Injection or the like is performed by driving the injection drive force generating unit 9 to move the screw 1 in an axial direction thereof through the drive force transmitting mechanism 8 and the sleeve 5. It is noted that a reference numeral 7 in Fig. 1 designates a hopper useful in feeding a resin into the barrel 2.

The injection apparatus as described above has a structure wherein a mechanical fast-connection is provided in the range of the injection drive force generating unit 9 to the screw 1, so that a movement of the injection drive force generating unit 9 is directly transmitted to the screw 1.

An injection apparatus in an electromotive injection molding machine also has an electromotive servomotor serving as the injection drive force generating unit 9, the drive force transmitting mechanism 8 and the screw 1, all of which are completely fast connected. When a pressure control is required, an injection pressure, a holding pressure and a back pressure or the like are controlled by moving the screw forwards and backwards with the servomotor on the basis of data sent from a pressure sensor such as a load cell.

In an injection step and a pressure holding step of the injection apparatus, a rapid reduction in pressure from a high injection pressure to a low holding pressure is required to prevent molding defects such as flash from developing. For this reason, the control of pressure has been generally performed by means of increasing a pressure control gain to regulate the pressure so as to provide a swift movement of the screw.

The control as described above yields a large pressure deviation when switching from the high injection pressure to the low holding pressure is achieved. Then, the resultant large pressure deviation is substantially increased with a high gain, thereby allowing the injection drive force generating unit 9 (the electromotive servomotor) to be driven. Consequently, the servomotor and the screw connected to the servomotor may move to undershoot a target holding pressure value. As a result, the movement as described above leads to a development of molding defects such as shorts and shrink marks with a molded product. This phenomenon outstandingly occurs by controlling the gain so as to attain a fall of pressure in a shorter period of time, and also involves an extreme reduction in pressure at the initial stage of the pressure holding step, leading to the development of troubles in a molding point of view.

In addition, the screw is completely fast connected to the injection drive force generating unit (the injecting servomotor) through the screw mounting part and the drive force transmitting mechanism. For this reason, at the initial stage of start of an injection operation, the screw gives a motion substantially depending on acceleration/deceleration characteristics of the injection drive force generating unit. Thus, the screw is moved under the influence of the acceleration characteristics of the injection drive force generating unit itself and the inertia and backlash of the drive force transmitting mechanism or the like. This means that a time to accelerate is required at the initial stage of start of the injection, and that it is difficult to move the screw (i.e., make the screw respond to the injection step) at a rate as predetermined immediately after the start of the injection.

An embodiment of the present invention may overcome the problems with the above conventional art, thereby enabling a rapid reduction in pressure and also a prevention of the undershooting of pressure from occurring. Also, it may be possible to provide an injection apparatus used in an injection molding machine to enable a screw to start moving at a predetermined rate on the occasion of injection. Further, it may be possible to provide a molding method resulting from overcoming the problems with the conventional art by using the injection apparatus.

one aspect of the present invention provides an injection apparatus used in an injection molding machine to transmit a drive force generated by an injection drive force generating unit to a screw through a drive force transmitting mechanism to move the screw for performing injection, wherein a dead zone of movement is provided by a predetermined distance in the range of the injection drive force generating unit to the screw. The dead zone of movement may be provided as follows:

The dead zone of movement may be provided at a connection part of the screw with a screw mounting member by providing the screw so as to be movable relatively to the screw mounting member in an axial direction of the screw within a predetermined range.

Alternatively, the dead zone of movement may be provided at a connection part of the screw mounting member with the drive force transmitting mechanism by providing the screw mounting member so as to be movable relatively to the drive force transmitting mechanism in the axial direction of the screw within the predetermined range.

Alternatively, the dead zone of a predetermined distance enough to yield a blank feed may be provided in the drive force transmitting mechanism.

In addition, to meet various amounts of dead zone, the injection apparatus may have an adapter composed of two members having therebetween a predetermined amount of dead zone with one member engaged with the other member in an axially relatively movable manner. The adapter may be inserted to any of positions in the range of the injection drive force generating unit to the screw for connection to the injection apparatus. Then, the amount of dead zone of the two members may be determined to be equal to a distance which allows the screw to start moving after the injection drive force generating unit has accelerated the speed up to the predetermined moving rate of the screw from the start of driving. In the two members having therebetween the predetermined amount of dead zone, a shock absorbing material may be bonded to at least a face of one member which makes contact with a face of the other member after the two member moves relatively to each other through the dead zone.

In addition, the injection apparatus of the injection molding machine according to each of the above modes is used for molding. In this case, prior to the injection operation, there is provided a step of shifting a position, at which the injection operation is started with the operation of the injection drive force generating unit, to a position which allows the screw to start moving after the injection drive force generating unit has moved a distance corresponding to the predetermined amount of dead zone. Then, after the period between the start of the injection operation and the completion of acceleration, there is provided a step of allowing the screw to start moving at a predetermined injection rate or a rate close thereto for performing the injection at the predetermined injection rate from the start of the injection.

With the above structure and method, a predetermined holding pressure may be attainable by rapidly reducing the pressure and also preventing the undershooting from occurring, so that the development of molding defects such as flash and shrink marks may be suppressed. In addition, as it is possible to inject a resin from the start of the injection at a screw rate as predetermined, an initial rate of the resin to be injected into a mold may be higher so that resin can be easily filled, with the result that the development of molding defects such as shorts may be suppressed. Further, it may be possible to realize the above effects simultaneously at lower cost.

The foregoing and other features will become apparent from the following description of preferred embodiments with reference to the accompanying drawings in which:
Fig. 1 is a view illustrating a screw fast-connection part of a conventional injection apparatus;
Fig. 2 is a side view for explaining an operation of a screw mounting part in an injection apparatus according to a first embodiment of the present invention;
Fig. 3 is a side view showing a screw mounting part in an injection apparatus according to a second embodiment of the present invention;
Fig. 4 is a side view showing a screw mounting part in an injection apparatus according to a third embodiment of the present invention;
Fig. 5 shows an exemplary adapter, which is inserted to any of positions in the range of an injection drive force generating unit to a screw for connection to an injection apparatus according to the present invention; and
Fig. 6 is a graph showing a comparison in pressure waveform between the conventional art and the present invention.

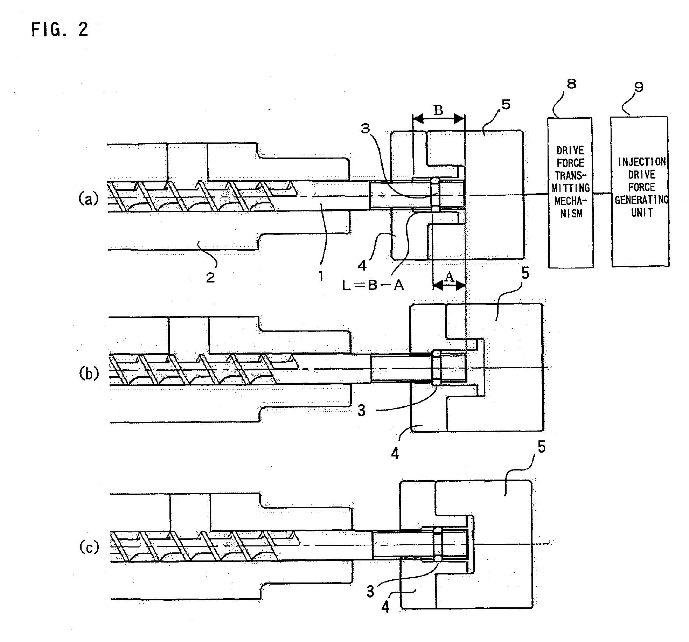

Fig. 2 is a view for explaining a relation between a screw and a screw mounting member fast connected thereto in an injection apparatus of a first embodiment of the present invention. It is noted that similar components to those of the conventional injection apparatus shown in Fig. 1 are designated by like reference numerals. It is also noted that Fig. 2 omits an illustration of bolts, although a bush 4 and a sleeve 5 shown in Fig. 2 need to be bolted like the conventional injection apparatus shown in Fig. 1.

The injection apparatus of the first embodiment in Fig. 2 is different from the conventional injection apparatus in Fig. 1 in that the former has, between a screw 1 and a screw mounting member composed of the sleeve 5 and the bush 4, a dead zone which allows a relative movement of the screw to the screw mounting member. Specifically, as shown in Fig. 2(a), the screw 1 has a retainer 3 which does not come into contact with a retainer holding face of the bush 4 even when the end face of the screw 1 comes into contact with the face of the sleeve 5. In other words, the retainer 3 is not pressed by the sleeve 5 and the bush 4. The screw 1 is mounted to the screw mounting member in an axially relatively movable manner (i.e., the retainer 3 is mounted to the sleeve 5 in an axially relatively movable manner).

As shown in Fig. 2(a), assume that a distance between the end face of the screw 1 and a contact face of the retainer 3 with the bush is represented by A, and a distance between a contact face of the sleeve 5 with the screw 1 and the retainer holding face of the bush 4 is represented by B. Then, a distance (B-A) is considered to be a relatively movable range of the screw 1 to the screw holding member. The above distance is provided as an amount L of dead zone (an amount of blank feed).

The sleeve 5 is mechanically connected to an injection drive force generating unit 9 such as an injecting servomotor through a screw drive force transmitting mechanism 8, like the conventional injection apparatus. It is noted that the principle of the present invention lies in the presence of the above amount L (= B-A) of dead zone in the range of the injection drive force generating unit 9 to the screw 1 in a direction of movement of the screw.

In addition, a shock absorbing material is bonded to at least one of the two faces which contact each other after they move in the dead zone (i.e., after the blank feed). The shock absorbing material is used to relieve an impact given when the two faces contact each other after the movement through the dead zone. In the injection apparatus of the first embodiment, the shock absorbing material is bonded to at least one of the contact face of the sleeve 5 with the screw 1 and a contact face of the tip end of the screw 1 with the above contact face of the sleeve 5. The shock absorbing material is also bonded to at least one of the retainer holding face of the bush 4 and the contact face of the retainer 3 with the bush 4.

A molding operation using the injection mechanism as described above will be described in the following.

First, a drive source (not shown) for rotating the screw is driven to rotate the sleeve 5 and the bush 4 through a transmission mechanism (not shown), thereby allowing the screw 1 to rotate. The resin introduced through the hopper 7 melts with shear heat and friction heat that are generated by the rotation of the screw 1 and also with heat applied from a heater provided on the outside of a barrel 2. The molten resin is stored in a tip end part of the barrel 2. Then, a melting pressure of the resin forces the screw 1 to move backward (i.e., to draw out of the barrel 2, specifically, rightward in Fig. 2) until the tip end of the screw 1 contacts the sleeve 5 as shown in Fig. 2(a) to move the sleeve 5 backward.

The injection drive force generating unit 9 is driven to generate a predetermined back pressure against a force that moves the screw 1 backward. As a result, when the melting pressure of the resin exceeds the back pressure generated by the injection drive force generating unit 9, the screw 1 begins to move backward in a state as shown in Fig. 2(a). Specifically, the predetermined back pressure is applied to the resin during metering step.

After the screw 1 has reached a predetermined metering position to bring the metering to completion, in decompression or sucking-back, the injection drive force generating unit 9 (the injecting servomotor) drives to move the sleeve 5 and the bush 4 further backward (rightward in Fig. 2). Then, the bush 4 presses the retainer 3 of the screw 1 rightward to move the screw 1 backward, so that the decompression is performed. Then, the pressure of the resin in the barrel is reduced until it reaches almost zero, and as a result, the backward movement of the screw 1 by the resin pressure is stopped with the retainer 3 of the screw 1 in contact with the retainer holding face of the bush 4, as shown in Fig. 2(b).

In the subsequent injection step, the injection drive force generating unit 9 is accelerated to such a degree that the predetermined injection rate is reached. However, because of the presence of the amount L (=B-A) of dead zone, only the screw mounting member composed of the sleeve 5 and the bush 4 is moved (the blank feed is performed) as shown in Fig. 2(c) during the period at which the injection drive force generating unit is accelerated at the initial stage of start of the injection, whereas no movement of the screw 1 occurs during the above period.

When the bush 4 and the sleeve 5 are moved by a distance corresponding to the amount L (=B-A) of dead zone with completion of the acceleration to such a degree that the predetermined rate is reached, the screw 1 is placed with its tip end face contacting the contact face of the sleeve 5 with the screw, as shown in Fig. 2(a). Thereafter, the screw 1 is driven at the predetermined rate to proceed to a forward movement thereof. In this manner, the screw 1 may be moved at the predetermined rate from the start of the injection, so that the injection at the predetermined rate may be performed from the start of the injection.

When the injection step comes close to the completion, the switching from the injection rate control to the pressure control is performed. Then, when the switching to the pressure holding step is performed upon completion of the injection step, the switching to a predetermined holding pressure of low-pressure level is required. In this pressure holding step, a target predetermined pressure in a pressure feedback control is a holding pressure of low-pressure level. However, as a detected pressure in this pressure holding step is in a high-pressure state, a large pressure deviation takes place. For this reason, the injection drive force generating unit 9 drives the screw 1 so as to move the screw 1 backward on the basis of the pressure deviation.

Considering that the pressure deviation at the time of switching from the injection step to the pressure holding step increases with increasing difference between the injection pressure of high-pressure level and the holding pressure of low-pressure level, and besides, the control to provide a faster response by increasing the gain of the pressure feedback control is frequently required for rapidly achieving the switching to the predetermined holding pressure of low-pressure level, the conventional injection apparatus involves a problem in that an excessive backward movement of the screw 1 causes the undershooting of pressure at the time of switching to the pressure holding step.

On the other hand, the injection apparatus of the present embodiment limits the components, which are rapidly moved at the time of switching to the pressure holding step, to the injection drive force generating unit 9, the drive force transmitting mechanism 8 and the screw mounting member composed of the sleeve 5 and the bush 4, even though the switching to the pressure holding step causes an increase in pressure deviation and also involves the gain control.

Specifically, the large pressure deviation causes the injection drive force generating unit 9 to rapidly start the operation. This operation is followed by the operation of the drive force transmitting mechanism 8 connected to the injection drive force generating unit 9 and the movement of the screw mounting member composed of the sleeve 5 and the bush 4.

While the screw 1 suffers the resin pressure of high-pressure level, the backward movement of the sleeve 5 releases the screw 1 from suffering a pressure that counters the resin pressure of high-pressure level, so that the screw 1 is also moved backward. Forces that hinder the movement of the screw 1 such as the viscosity and the shear force of the resin in the barrel 2 and the friction force of a pellet are also acting on the screw 1. Thus, these forces are supposed to cause a delay of the backward movement of the screw 1. Specifically, the backward movement of the screw 1 causes the resin pressure to reduce in proportion to the distance of the backward movement of the screw. Then, when the resin pressure drops, the forces that hinder the movement of the screw such as the viscosity and the shear force of the resin and the friction force of the pellet relatively increase with the reduction of resin pressure, so that the backward movement rate of the screw 1 goes down. As a result, even if the rapid movement of the injection drive force generating unit 9 allows the sleeve 5 to rapidly move backward, the screw 1 is moved later than the sleeve 5 without following the movement of the sleeve 5. With the reduction in resin pressure, the backward movement rate of the screw 1 goes down and also, the pressure deviation becomes smaller, so that the backward movement rate of the sleeve also goes down, thereby providing the control such that the predetermined holding pressure may be held.

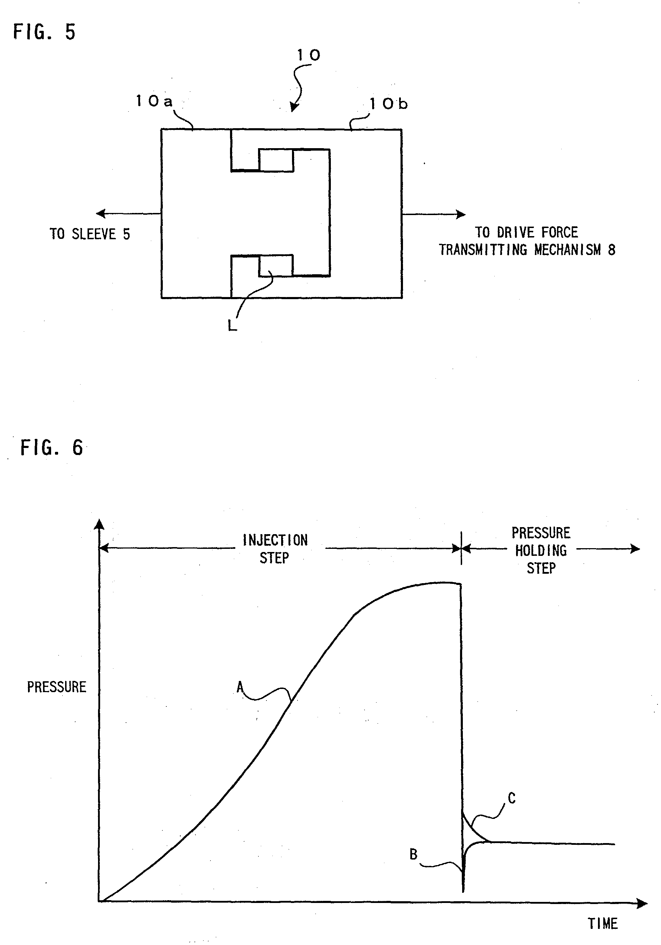

Fig. 6 is a pressure waveform graph for explaining the difference between the conventional art and the embodiment of the present invention at the time of switching from the injection step to the pressure holding step.

The conventional art is the same as the embodiment of the present invention in resin pressure waveform during the injection step as shown by a reference numeral A.

The switching from the injection step to the pressure holding step yields the large pressure difference that allows the screw mounting member composed of the sleeve 5 and the bush 4 to rapidly move backward. As shown in Fig. 1, the conventional injection apparatus has no dead zone of movement between the screw 1 and the screw mounting member, so that the screw 1 is rapidly moved backward, together with the screw mounting member, as the retainer 3 is pressed by the bush 4. As a result, an excessive backward movement may occur, which results in undershooting of pressure as shown by a reference numeral B in Fig. 6, leading to a reduction in pressure down to a pressure lower than the target predetermined holding pressure.

In contrast, according to the embodiment of the present invention, switching from the injection step to the pressure holding step as shown in Fig. 2(a), the screw mounting member composed of the bush 4 and the sleeve 5 is rapidly moved backward. The retainer 3 of the screw 1 is, however, placed in a free state as shown in Fig. 2(c), since the retainer 3 does not bring into contact with the retainer holding face of the bush 4. Then, the screw 1 is moved backward by the action of the resin pressure. The backward movement of the screw 1 causes the resin pressure to reduce so that the resin pressure can reach the predetermined holding pressure without causing the undershooting, as shown by a reference numeral C in Fig. 6.

As described above, the injection molding method using the injection apparatus according to the present invention is almost the same as the conventional molding method. In other words, the similar manner to that of the conventional molding method is applied to the operation of the metering step, and the decompression is also performed after the completion of the metering in the similar manner to that of the conventional molding method. In this case, for moving the screw 1 at the predetermined injection rate from the start of the injection to allow the injection to be performed, it is necessary to separate the contact face of the sleeve 5 with the screw from the tip end face of the screw 1 so as to provide the dead zone of movement therebetween after the completion of the decompression, as shown in Fig. 2(b).

The similar manner to that of the conventional molding method is also applied to the injection step of the present injection molding method. However, the contact face of the sleeve 5 with the screw and the end face of the screw 1 have therebetween the dead zone without contacting each other at the time of start of the injection. Thus, even if the injection drive force generating unit 9 is driven to move the sleeve 5 forward, the dead zone prevents the movement of the sleeve 5 from being transmitted to the screw 1, so that the screw 1 maintains stopped. When the injection drive force generating unit 9 is accelerated to such a degree that its drive rate enough to move the sleeve 5 at the predetermined rate is reached, the sleeve 5 contacts the end face of the screw 1, as shown in Fig. 2(a), to thereafter move the screw 1 at the predetermined rate. As a result, the screw 1 may be moved at the predetermined rate from the start of the injection, so that the injection at the predetermined rate may be performed from the start of the injection.

Following the above operation, the injection step is performed in the similar manner to that of the conventional molding method. The similar manner to that of the conventional molding method is also applied to the switching from the injection step to the pressure holding step and the control in the pressure holding step. However, as described above, the undershooting of pressure may be suppressed at the time of switching from the injection step to the pressure holding step, so that the smooth switching to the pressure holding step is obtained, unlike the conventional molding method.

The above description has been given of the molding method, by which the injection at the predetermined injection rate is performed from the start of the injection. In this molding method, a distance of movement in an acceleration section between the start of acceleration of the injection drive force generating unit 9 and the completion of acceleration thereof to such a degree that the sleeve 5 reaches the predetermined rate needs to be equal to or not more than the amount L (=B-A) of dead zone. For this reason, it is necessary to determine the amount L (=B-A) of dead zone in consideration of the characteristics or the like of the injection drive force generating unit 9 and the drive force transmitting mechanism 8. Specifically, the amount L (= B-A) of dead zone is determined in accordance with the characteristics or the like of the injection drive force generating unit 9 such that the injection drive force generating unit 9 may bring the acceleration to completion while the sleeve 5 moves the distance L (=B-A) of dead zone (i.e., in the course of the blank feed).

There may be a case where performing the injection in a slow accelerating manner is better than performing the injection at the predetermined injection rate from the start of the injection. If this is the case, the injection apparatus may wait for the next injection with the sleeve 5 preliminarily moved forward up to a position where the sleeve 5 contacts the tip end face of the screw 1 after the decompression. It is noted that either of the above injection method may be adopted in the present invention.

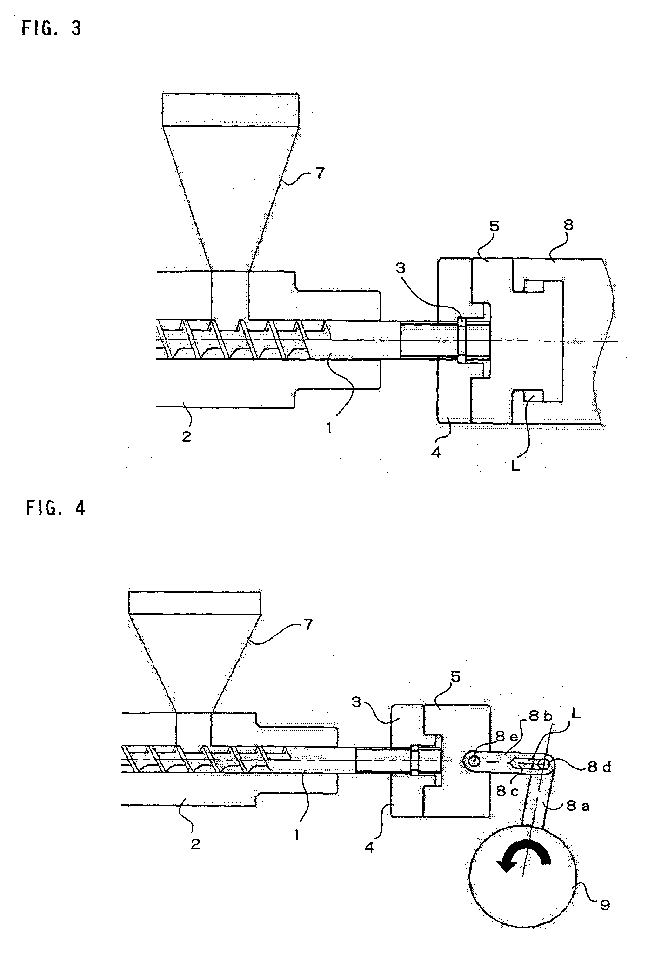

Fig. 3 illustrates a screw mounting member of an injection apparatus according to a second embodiment of the present invention. The injection apparatus of the second embodiment in Fig. 3 has no dead zone between the screw 1 and the screw mounting member composed of the sleeve 5 and the bush 4, in other words, the screw 1 and the screw mounting member are fixed in an axially relatively immovable manner, like the conventional injection apparatus of Fig. 1. However, in the case of the injection apparatus of the second embodiment in Fig. 3, the sleeve 5 and the drive force transmitting mechanism 8 are connected together so as to allow an amount L of dead zone.

In the injection apparatus of the second embodiment in Fig. 3, the sleeve 5 has a concave groove, and the drive force transmitting mechanism 8 is provided with a claw part. Then, the claw part of the drive force transmitting mechanism 8 is engaged with the concave groove of the sleeve 5 so as to make the claw part movable within the concave groove in a width direction thereof, providing an amount L of dead zone. In addition, there is also provided the shock absorbing material that is bonded to at least one of a side face of the concave groove of the sleeve 5 that contacts the claw part after the movement through the dead zone (i.e., after the blank feed) and a contact face of the claw part of the drive force transmitting mechanism 8 with the sleeve 5. The shock absorbing material is used to relieve an impact given when the sleeve 5 and the claw part contact each other.

The injection apparatus of the second embodiment is the same as that of the first embodiment except for the position at which the amount L of dead zone is provided. Thus, a molding method using the injection apparatus of the second embodiment is the same as that using the injection apparatus of the first embodiment.

Fig. 4 illustrates an injection apparatus according to a third embodiment of the present invention.

The injection apparatus of the third embodiment in Fig. 4 is the same as the conventional injection apparatus in Fig. 1 in relation of the connection between the screw 1 and the screw mounting member composed of the sleeve 5 and the bush 4, in other words, the screw 1 and the screw mounting member are fixed in an axially relatively immovable manner.

It is, however, noted that in the case of the injection apparatus of the third embodiment in Fig. 4, an amount L of dead zone (the amount of blank feed) is provided within the drive force transmitting mechanism 8. In this connection, the injection apparatus of the third embodiment uses an injecting servomotor or like device, which provides a rotation output, as the injection drive force generating unit 9, and uses a link mechanism as the drive force transmitting mechanism 8. The injection drive force generating unit 9 has an output rotation axis, to which a first link 8a is fixed. The first link 8a has, at its tip end, a pin 8d, which is in engagement with a slot 8c provided in one end of a second link 8b. In addition, the other end of the second link 8b is mounted to the sleeve 5 with a pin 8e in a freely swinging manner.

The injection apparatus of the third embodiment in Fig. 4 provides an engagement part of the pin 8d with the slot 8c for the amount L of dead zone as the amount of blank feed. When the injection apparatus is assumed to start the injection step from the state shown in Fig. 4, the drive force generating unit 9 is driven to rotate its output rotation axis in a direction shown by an arrow in Fig. 4, thereby allowing the first link 8a to rotate. However, the rotation of the first link 8a only causes the pin 8d to move throughout the slot 8c, providing no movement of the sleeve 5. Thus, no movement of the screw 1 occurs during the above operation. However, upon completion of the movement of the pin 8d by a distance corresponding to a portion of the slot 8c, the second link 8b is pressed by the pin 8d to move the screw 1 forward through the sleeve 5 for performing the injection. The completion of the acceleration during the movement of the pin 8d throughout the slot 8c will be satisfied to ensure that the screw 1 would be moved at the predetermined rate from the start of the injection.

In addition, even if the drive force generating unit 9 is driven in the direction opposite to the arrow in Fig. 4 at the time of switching from the injection step to the pressure holding step, the pin 8d is moved throughout the slot 8c at the beginning to prevent the screw 1 from the backward movement, so that no undershooting of pressure is caused, like the injection apparatus of the first embodiment. It is noted that the injection apparatus of the third embodiment also has the shock absorbing material that is bonded to a contact portion provided after the movement through the dead zone (i.e., after the blank feed). Specifically, in the injection apparatus of the third embodiment, the shock absorbing material is bonded to an outer circumference of the pin 8d.

Thus, it may be said that the injection apparatus of each of the second and third embodiments allows the similar molding operation to that of the injection apparatus of the first embodiment to be performed.

As shown in the above first to third embodiments, the molding operation and the molding method as described above may be attained, if the amount L of dead zone as the amount of blank feed is provided at any position in the range of the injection drive force generating unit 9 to the screw 1 serving as the ultimate component driven with the injection drive force generating unit 9. Thus, the position at which the amount L of dead zone is provided may be a connection part of the screw 1 with the screw holding member like the first emboditnent, a connection part of the screw holding member (the sleeve 5) with the drive force transmitting mechanism 8 like the second embodiment, a position within the drive force transmitting mechanism 8 like the third embodiment and besides, a connection part of the injection drive force generating unit 9 with the drive force transmitting mechanism 8 or the like.

In addition, the screw may be moved at the predetermined rate from the start of the injection to perform the injection of the resin at the predetermined injection rate from the start of the injection, if the amount L of dead zone is determined to be not less than the distance which allows the screw to start moving after the injection drive force generating unit 9 has accelerated the speed up to the predetermined moving rate of the screw from the start of driving. However, an excessive amount of dead zone causes a longer cycle time undesirably. Thus, it is desirable that the amount of dead zone be substantially equal to a distance of movement during the acceleration period. However, in case where an amount of dead zone is so small that the desirable amount cannot be provided, the operation and the effect as described above can be obtained accordingly.

Alternatively, the amount L may be set slightly larger to provide such a margin of the amount L of dead zone as to correspond to the distance of movement in the acceleration section by operating the injection drive force generating unit 9 after the metering and decompression (sucking-back), thereby allowing the injection drive force generating unit 9 to wait at a position in the margin of the dead zone. Then, starting the injection operation with this position allows the resin to be injected into the mold at the predetermined injection rate from the start of the injection, without the need for a longer cycle time in particular.

Alternatively, the amount of dead zone may be provided in an adjustable manner. For instance, two or more adapters 10 having different distances of the amount L of dead zone are prepared, each of the adapters being composed of two members 10a, 10b engaged with each other to be movable relatively to each other in an axial direction by the distance corresponding to the amount L of dead zone, as shown in Fig. 5. Then, the adapter 10 having the optimum amount of dead zone is selected among these adapters to add the selected adapter in a force transmission path in the range of the injection drive force generating unit to the screw. For instance, an injection apparatus having the optimum amount of dead zone may be provided by connecting the adapter to the injection apparatus with the member 10a mounted to the sleeve 5 of the screw mounting member and with the other member 10b mounted to the drive force transmitting mechanism 8. In the adapter 10 shown in Fig. 5, the shock absorbing material is bonded to at least one of the contact faces which come into contact with each other after the movement through the dead zone.

An injection apparatus in an injection molding machine transmits a drive force generated by an injecting servomotor to a screw 1 through a drive force transmitting mechanism 8 to move the screw 1 for performing injection. In addition, the injection apparatus has a dead zone of movement provided by a predetermined displacement distance L=B-A in the coupling between the injecting servomotor to the screw 1.

## Claims

1. An injection apparatus used in an injection molding machine to transmit a drive force generated by an injection drive force generating unit to a screw through a drive force transmitting mechanism to move the screw for performing injection, **characterized in that**:
a dead zone of movement of a predetermined distance is provided at any place in the range of said injection drive force generating unit to the screw.

2. An injection apparatus used in an injection molding machine and including an injection drive force generating unit, a drive force transmitting mechanism, a screw mounting member and a screw, wherein said injection drive force generating unit is connected to said screw mounting member through said drive force transmitting mechanism to drive said screw mounting member in an axial direction of the screw with a drive force generated by said injection drive force generating unit for moving said screw in the axial direction, **characterized in that**:
a dead zone of movement is provided by providing said screw to be movable relatively to said screw mounting member in the axial direction of the screw within a predetermined range.

3. An injection apparatus used in an injection molding machine and including an injection drive force generating unit, a drive force transmitting mechanism, a screw mounting member and a screw, wherein said injection drive force generating unit is connected to said screw mounting member through said drive force transmitting mechanism to drive said screw in an axial direction thereof through said drive force transmitting mechanism and said screw mounting member with a drive force generated by said injection drive force generating unit, **characterized in that**:
a dead zone of movement is provided by providing said screw mounting member to be movable relatively to said drive force transmitting mechanism in the axial direction of the screw within the predetermined range.

4. An injection apparatus used in an injection molding machine and including an injection drive force generating unit, a drive force transmitting mechanism, a screw mounting member and a screw, wherein said injection drive force generating unit is connected to said screw mounting member through said drive force transmitting mechanism to drive said screw mounting member in an axial direction of the screw with a drive force generated by said injection drive force generating unit for moving the screw in the axial direction, **characterized in that**:
a dead zone of a predetermined distance enough to yield a blank feed is provided within said drive force transmitting mechanism.

5. The injection apparatus in the injection molding machine according to claim 1, wherein an adapter composed of two members having therebetween the dead zone with one member engaged with the other member in an axially relatively movable manner is inserted to any place in the range of said injection drive force generating unit to the screw.

6. The injection apparatus in the injection molding machine according to any one of claims 1 to 5, wherein said amount of dead zone of movement is determined to a distance which allows said screw to start moving after said injection drive force generating unit has accelerated the speed up to the predetermined moving rate of said screw from the start of driving.

7. The injection apparatus in the injection molding machine according to any one of claims 1 to 6, wherein in said two members having therebetween said dead zone, a shock absorbing material is bonded to at least a face of one member which makes contact with a face of the other member after the two member moves relatively to each other through the dead zone.

8. A molding method using the injection apparatus in the injection molding machine according to any one of claims 1 to 7, comprising the step of:
prior to the injection operation, shifting a position, at which the injection operation is started with the operation of said injection drive force generating unit, to a position which allows the screw to start moving after the injection drive force generating unit has moved a distance corresponding to the predetermined amount of dead zone; and
after the period between the start of the injection operation and the completion of acceleration, allowing the screw to start moving at a predetermined injection rate or a rate close thereto.
